# EUROPÄISCHE PATENTSCHRIFT

(11) **EP 1 081 282 B1**
(45) Veröffentlichungstag und Bekanntmachung des Hinweises auf die Patenterteilung: **11.02.2004**
(21) Anmeldenummer: 00114715.6
(22) Anmeldetag: 08.07.2000
(51) Int. Cl.: D21G 1/02, F16C 13/00, F16K 3/34

(54) **Druckregelventil für ein fluides Druckmittel**
Pressure control valve for pressurised fluid
Soupape de régulation de pression pour fluide sous pression

(30) Priorität: 20.08.1999 DE 29914610 U
(43) Veröffentlichungstag der Anmeldung: 07.03.2001
(73) Patentinhaber: Eduard Küsters Maschinenfabrik GmbH & Co. KG, 47805 Krefeld (DE)
(72) Erfinder: Küsters, Karl-Heinz, 47804 Krefeld (DE)
(74) Vertreter: Kluin, Jörg-Eden, Dr. Dipl.-Phys.

(56) Entgegenhaltungen:
- DE-A- 2 407 510
- DE-A- 2 834 132

## Beschreibung

Die Erfindung bezieht sich auf ein Druckregelventil der dem Oberbegriff des Anspruchs 1 entsprechenden Art.

Es ist bekannt, daß Strömungskräfte stärken Einfluß auf das stationäre und dynamische Verhalten hydraulischer Ventile nehmen. Sie entstehen an Steuerkanten von hydraulischen Ventilen durch die Strömungsgeschwindigkeit des Druckmediums am Steuerkolben und wirken den axialen Impulskräften der Öffnungsbewegung des Kolbens entgegen. Diese Kräfte sind von der treibenden Druckdifferenz bei der Steuerkante und vom Ventilkolbenhub abhängig.

Aus der DE 24 07 510 B2 ist ein dem Oberbegriff des Anspruchs 1 entsprechendes Druckregelventil bekannt, bei welchem der Steuerkolben über eine pneumatische Membran angetrieben ist. Der Steuerkolben weist eine Umfangsnut auf, deren eine Flanke eine Steuerkante bildet, die mit radialen Durchbrüchen in einer den Steuerkolben bei seiner Längsverschiebung führenden Büchse zusammenwirkt. Vom Grund der Umfangsnut geht eine Bohrung in das Innere des Steuerkolbens, der dort eine koaxiale Längsbohrung aufweist. Das fluide Druckmittel, in dem Beispiel eine Druckflüssigkeit, tritt von der Außenseite der Büchse durch die Bohrung in die Umfangsnut und von dort in geeignete Weiterleitungskanäle über. Durch die Strömungskräfte bei diesem Übertritt erfährt der Steuerkolben Zusatzkräfte, die die über die Membran vermittelte Einstellung verfälschen.

Zur Kompensation dieser Abweichungen des Istwerts vom Sollwert werden bisher im wesentlichen drei Verfahren angewendet. Im ersten Verfahren bedingt eine Vergrößerung der im Regler vorhandenen Kolbenfläche eine im Verhältnis zu den strömungsbedingten Kräften am Steuerkolben große Stellkraft, so daß die strömungskraftbewirkte Abweichung vemachlässigbar wird. Allerdings ergibt dieses Verfahren zwangsläufig großvolumige Ventile und somit einen erhöhten Aufwand zur Erzeugung der Sollwertstellkräfte.

Eine weitere Methode besteht in dem Einbau von Druckaufnehmern in den Ausgangsdruckanschluß des Ventils und eine Kompensation der Istwertabweichung durch übergeordnete Regler.

Die dritte Methode besteht darin, durch entsprechende Ausbildung der Steuerkante, des Steuerkolbens und dazugehörigen Strömungskanäle die Störkräfte am Steuerkolben zu reduzieren. Um jedoch zur hierfür benötigten Geometrie zu gelangen, ist ein hoher Aufwand an Berechnungen, Versuchen und Herstellung der notwendigen Kolben und Strömungskräfte erforderlich.

In dem Aufsatz von Christoph Latour "Entwicklung und Untersuchung strömungskraftreduzierender Maßnahmen in 2-Wege-Einbauventilen" (Z:O+P 'Ölhydraulik und Pneumatik'38 (1994) Nr. 1-2, Seiten 54 bis 58) wird dieser Aspekt allgemein behandelt, und es wird versucht, durch berechnete Gestaltung der an der Strahlumlenkung beteiligten Wandungen eine Minimierung der Strömungskräfte zu erreichen. Berechnung und Herstellung derartiger Ventile sind jedoch aufwendig, und es ist ihre Funktion auch nur in bestimmten Durchflußbereichen akzeptabel.

Aus der DE 28 34 132 A1 ist eine hydraulische Verteiler- bzw. Steuervorrichtung beispielsweise zum umbördeln von zu bearbeitenden Teilen oder für Bremssysteme bekannt, bei der zur Vermeidung von Druckspitzen ein Hauptschieber vorgesehen ist, der der Wirkung einer tarierten Begrenzungsfeder unterworfen ist. Ein zweiter Schieber ist in dem ersten Schieber verschieblich montiert, derart, daß die beiden Schieber zwischen sich eine ringförmige Kammer freilassen.

Diese Kammer bildet einen Reaktionsquerschnitt, durch den der gesamte Durchsatz an Druckflüssigkeit hindurch geht. Sie ist derart ausgebildet, daß sie in der Lage ist, den ersten Schieber zu veranlassen, die Druckflüssigkeitszufuhr zu unterbrechen oder zu hemmen, wenn Überdrücke auftreten.

Nachteilig ist bei dieser Vorrichtung, daß die unter einem vorgegebenen Druck bereitgestellten Menge an Druckflüssigkeit auf Grund des begrenzten Volumens der Ringkammer begrenzt ist.

Der Erfindung liegt die Aufgabe zugrunde, ein Druckregelventil, das zur Steuerung des Drucks von Druckflüssigkeit, mit der hydraulische Stützelemente einer durchbiegegesteuerten Walze beaufschlagt werden, so auszugestaften, daß es ohne schwierige Berechnungen und Fertigungsschritte über einen großen Durchflußmengenbereich selbsttätig die Strömungskräfte ausschaltet.

Diese Aufgabe wird durch die in Anspruch 1 wiedergegebene Erfindung gelöst.

Auf Grund der erfindungsgemäßen Ausgestaltung stehen beide Steuerkolben unter der Wirkung des Drucks im Druckmittelauslaß und werden bei einer Veränderung dieses Drucks, die durch eine unerwünschte strömungskraftbedingte Verlagerung des Hauptsteuerkolbens zustande kommt; gemeinsam bewegt, und zwar so, daß eine strömungskraftbedingte Veriagerung des Hauptsteuerkolbens durch die entsprechende Verlagerung des Vorsteuerkolbens rückgängig gemacht wird, so daß der Hauptsteuerkolben seine ursprünglich anvisierte Position im wesentlichen wieder einnimmt.

Durch die Erfindung erfolgt also die Kompensation selbsttätig, d.h. ohne äußere Hilfsmittel nur durch den Druck des Druckmittels, der die Teile des Ventils zwangsläufig betätigt. Es werden an deren Fertigung keine besonderen Anforderungen gestellt. Auch kann das Druckregelventil besonders kompakt gestaltet werden.

Zur Vermeidung von Schwingungen empfiehlt sich die Einschaltung einer Dämpfungsdrossel in die Verbindung des Druckmittelauslasses mit der anderen Stirnseite des Hauptsteuerkolbens gemäß Anspruch 3.

Auf der "anderen" Seite des Hauptsteuerkolbens kann dessen Druckbeaufschlagung in der in Anspruch 4 wiedergegebenen Weise erfolgen.

Das federbelastete Rückschlagventil nach Anspruch 5 dient der Vermeidung eines zu großen Druckunterschiedes zwischen Druckmitteleinlaß und Druckmittelauslaß.

Zweckmäßig mündet gemäß Anspruch 6 der Druckmitteleinlaß an der ansonsten geschlossenen, dem Steuerglied abgewandten Stirnseite des Ventilkörpers.

Dies erleichtert den Anschluß an eine äußere Druckmittelzuleitung.

Wenn der Ventilkörper gemäß Anspruch 7 außen zylindrisch ist, erleichtert dies die Fertigung, aber auch die Unterbringung des Ventilkörpers in entsprechenden Aufnahmebohrurigen eines dafür in Betracht kommenden Konstruktionsteils.

Der Druckmittelauslaß kann gemäß Anspruch 8 auf dem zylindrischen Außenumfang des Ventilkörpers münden, und es kann der Mündungsbereich nach beiden Seiten -axial gesehen - durch in Umfangsnuten des Ventilkörpers angeordnete Ringdichtungen abdichtbar sein.

Hierdurch kann der Ventilkörper ohne besondere Anforderungen an die Präzision und Dichtheit in eine Aufnahmebohrung eingeschoben werden, bis sich der Druckmittelauslaß mit einer in dem umgebenden Konstruktionsteil vorgesehenen Druckmittelableitung deckt.

Das Steuerglied kann gemäß Anspruch 9 die Außengestalt einer zylindrischen zu dem Ventilkörper koaxialen Scheibe haben, die mit dem Rand über den Außenumfang des Ventilkörpers radial vorspringt, so daß eine genaue Begrenzung der Einschiebetiefe des Ventilkörpers in die Aufnahmebohrung eines umgebenden Konstruktionsteils und Befestigungsmöglichkeiten gegeben sind, beispielsweise durch den Rand in das Konstruktionsteil führende Schrauben.

In einem weiteren Aspekt erstreckt sich die Erfindung auch auf eine Walze der im Oberbegriff des Anspruchs 10 beschriebenen, aus der DE 24 07 510 B2 bekannten Art, bei der zur Regelung der einzelnen Stützelemente ein Druckregelventil nach den Ansprüchen 1 bis 9 verwendet ist.

Das Druckregelventil ist gemäß Anspruch 11 zweckmäßig in einer der vorerwähnten Aufnahmebohrung eines äußeren Konstruktionsteils entsprechenden Querbohrung des Querhaupts angeordnet und liegt mit dem Rand des Steuerglieds gegen die Außenseite des Querhauptes an, wozu dort gemäß Anspruch 12 eine ebene Anlagefläche vorgesehen sein kann.

Eine wichtige Ausgestaltung der Erfindung ist die Anordnung der Querbohrungen im Bereich der bei der Durchbiegung des Querhaupts neutralen Zone desselben gemäß Anspruch 13.

Hierdurch geht nämlich die Unterbringung der zahlreichen Druckregelventile für die Stützelemente einer durchbiegungssteuerbaren Walze mit der geringstmöglichen Schwächung des stark durch Biegekräfte beanspruchten Querhauptes einher, im Gegensatz zu der Ausführungsform nach der DE 24 07 510 B2, bei der sich das Druckregelventil in der Wirkebene durch das ganze Querhaupt erstreckt und auf der biegeinneren und der biegeäußeren Seite desselben wichtigen Querschnitt für die Übertragung der Kräfte wegnimmt.

Ein weiterer Aspekt der Erfindung ist die Verwendung eines Druckregelventils nach den Ansprüchen 1 bis 9 in einer Walze nach den Ansprüchen 10 bis 13.

In der Zeichnung sind Ausführungsbeispiele der Erfindung dargestellt.
Fig. 1 zeigt einen Querschnitt durch ein Druckregelventil;
Fig. 2 zeigt eine schematische Ansicht eines Walzenpaars, teilweise im Schnitt, mit einer Druckmittelversorgung nach dem Stand der Technik;
Fig. 3 zeigt einen Querschnitt durch eine Walze nach Fig. 2 mit dem erfindungsgemäßen Druckregelventil.

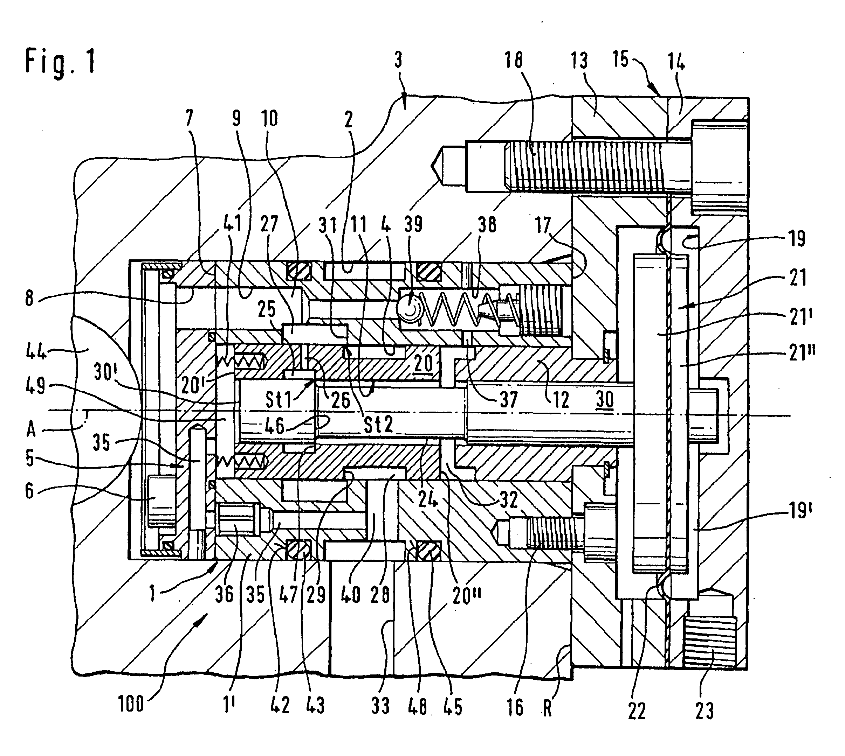

In Fig. 1 ist ein als Ganzes mit 100 bezeichnetes Druckregelventil dargestellt, welches einen am Außenumfang zylindrischen Ventilkörper 1 umfaßt, der in eine Bohrung 2 gleichen Durchmessers eines äußeren Konstruktionsteils 3 eingeschoben ist. Die Bohrung schneidet an ihrem unteren Ende eine Druckmittelzuleitung 44 in dem äußeren Konstruktionsteil 3 an, durch die ein fluides Druckmittel, zum Beispiel eine hydraulische Druckftüssigkeit, herangeführt wird. Der Ventilkörper 1 weist einen Teil 1' in Gestalt eines dickwandigen Rohrabschnittes mit einer zu seiner Achse A konzentrischen der Länge nach durchgehenden Schieberbohrung 4 auf, die nach unten durch eine Endplatte 5 verschlossen ist, die mittels Schrauben 6 an der Stirnseite 7 des Teils 1' befestigt ist und eine außerhalb der Achse A angeordnete, jedoch zu dieser parallele Durchgangsbohrung 8 aufweist, die mit einer Bohrung 9 gleichen Durchmessers in der Wandung des Teils 1' des Ventilkörpers 1 fluchtet, die den Druckmitteleinlaß 10 bildet.

In der Schieberbohrung 4 ist ein Hauptsteuerkolben 20 verschiebbar, der seinerseits eine Zentralbohrung 11 aufweist, in die ein Vorsteuerkolben 30 verschiebbar eingreift. Außerdem ist in der Schieberbohrung 4 etwa im rechten Drittel ihrer axialen Erstreckung eine Büchse 12 angeordnet, die von dem Vorsteuerkolben 30 durchgriffen ist und diesen an seinem in Fig. 1 rechten Ende führt. Die Büchse 12 steht über die in Fig. 1 rechte Stirnseite 17 des Ventilkörpers 1 vor und dient dort zur Zentrierung des Unterteils 13 eines als Ganzes mit 15 bezeichneten Steuergliedes, welches zusammen mit dem Oberteil 14 die Außengestalt einer dicken Scheibe aufweist, die mit ihrem Rand R radial über den Ventilkörper 1 übersteht und mit der ebenen Unterseite des Randes gegen das Konstruktionsteil 3 anliegt. Das Steuerglied 15 ist mittels achsparalleler Schrauben 16 mit dem Ventilkörper 1 und die gesamte Baugruppe 1,15 mittels achsparalleler, den radial vorstehenden Rand R des Steuergliedes 15 durchgreifender Schrauben 18 mit dem Konstruktionsteil 3 verbunden.

Das Steuerglied 15 ist in dem Ausführungsbeispiel pneumatisch betätigt. In dem Steuerglied 15 ist eine scheibenförmige Kammer 19 ausgebildet, in der ein Membrankolben 21 angeordnet ist, der auf dem Ende des Vorsteuerkolbens 30 sitzt. Die zwischen den beiden Hälften 21',21" des Membrankolbens 21 erfaßte Rollmembran 22 ist an ihrem äußeren Rand zwischen den beiden Hälften 13,14 des Steuergliedes 15 eingespannt. Zu der äußeren Hälfte 19' der Kammer 19 führt ein Anschluß 23 für ein pneumatisches oder hydraulisches Steuermedium, welches in die Kammerhälfte 19' eintritt und bei entsprechendem Druck den Membrankolben 21, der ringsum in der Kammer 19 entsprechendes Spiel hat, und den Vorsteuerkolben 30 in Richtung auf das andere Ende des Ventilkörpers 1 parallel zu der Achse A verlagert.

Statt des pneumatischen Steuergliedes kann auch ein elektrisches oder sonstiges Steuerglied Verwendung finden; für die Funktion des Druckregelventils ist dies nicht ausschlaggebend.

Der Vorsteuerkolben 30 weist in seiner dem Membrankolben 21 abgewandten Hälfte eine etwa ein Drittel seiner Länge einnehmende Eindrehung bzw. Umfangsnut 24 auf, deren dem Steuerglied 15 abgewandte Flanke 46 mit der dem Steuerglied 15 zugewandten Flanke 47 einer Innenumfangsnut 25 der zentralen Bohrung 11 des Hauptsteuerkolbens 20 eine Steuerkante St1 bildet. Vom Grund der Innenumfangsnut 25 geht eine die Wandung des Hauptsteuerkolbens 20 radial durchsetzende Querbohrung 26 aus, die in eine Innenumfangsnut 27 des Ventilgehäuses 1 mündet, die ihrerseits mit dem Druckmitteleinlaß 10 in Flüssigkeitsverbindung steht.

Auf der dem Steuerglied 15 zugewandten Seite der Querbohrung 26 trägt der Hauptsteuerkolben 20 eine Umfangsnut 28, deren dem Steuerglied 15 abgewandte Flanke 29 mit der dem Steuerglied 15 zugewandten Flanke 31 der Innenumfangsnut 27 eine weitere Steuerkante St2 bildet. Zwischen der in Fig. 1 rechten Stirnseite des Hauptsteuerkolbens 20 und der linken Stirnseite der Büchse 12 besteht ein Abstandsraum, der einen Vorsteuerraum 49 bildet, der über die Außenumfangsnut 24 des Vorsteuerkolbens 30 mit der Innenumfangsnut 25 und mit dem Druckmitteleinlaß 10 in Verbindung bringbar ist.

Auf der gegenüberliegenden Seite wirken gegen den Hauptsteuerkolben 20 Schraubendruckfedern 41, die sich gegen die Endplatte 5 abstützen.

Etwa in der Mitte - in Achsrichtung gesehen - weist der Ventilkörper 1 eine radiale Durchgangsbohrung auf, die den Druckmittelauslaß 40 bildet. Der Druckmittelauslaß 40 steht einerseits mit der Umfangsnut 28 des Hauptsteuerkolbens 20 und andererseits mit einer Druckmittelableitung 33 in dem äußeren Konstruktionsteil 3 in Verbindung. Zu beiden Seiten des Druckmittelauslasses 40 - axial gesehen - sind im Außenumfang des Ventilkörpers 1 Umfangsnuten 42,48 vorgesehen, in denen Ringdichtungen 43,45 (O-Ringe) angeordnet sind, die einem Übertritt von Druckmittel in axialer Richtung zwischen dem Ventilkörper 1 und der Bohrung 2 aus dem Bereich des Druckmittelaustritts 40 heraus verhindern.

Zwischen der in Fig. 1 linken Stirnseite 20' des Hauptsteuerkolbens 20 und der Endplatte 5 ist eine Meßkammer 49 gebildet, die über einen Verbindungskanal 35 mit dem Druckmittelauslaß 40 verbunden ist. In dem Verbindungskanal 35 ist zur Unterbindung von Schwingungen eine Dämpfungsdrossel 36 angeordnet.

Auf der gegenüberliegenden Seite grenzt der Hauptsteuerkolben 20 mit seiner dortigen Stirnseite 20" an die Vorsteuerkammer 32. Aus der Vorsteuerkammer 32 führt eine Querbohrung 37 in eine achsparallele Bohrung 38 mit einem federbelasteten Kugel-Rückschlagventil 39. Die Bohrung 38 steht auf der der Kugel gegenüberliegenden Seite mit dem Druckmitteleinlaß 10 in Verbindung. Das Kugel-Rückschlagventil 39 verhindert einen zu großen Unterschied zwischen den Drücken im Durckmitteleinlaß 10 und dem Druckmittelauslaß 40. Außerdem hält es im Falle eines Wegbleibens des Steuermitteldrucks in der äußeren Kammerhälfte 19' den Druck in der Vorsteuerkammer 32 aufrecht.

Das vorbeschriebene Druckregelventil 100 arbeitet wie folgt: Wird am Anschluß 23 ein Steuerdruck eines fluiden Steuerdruckmittels vorgegeben, so wird der Vorsteuerkolben 30 durch die in der äußeren Kammerhälfte 19' auf den Membrankolben 21 wirkende Kraft gemäß Fig. 1 nach links bewegt. Das zu steuernde fluide Druckmittel, zum Beispiel eine durch den Kanal 44 herangeführte hydraulische Druckflüssigkeit, tritt durch den Druckmitteleinlaß 10 und die Innenumfangsnut 27 des Ventilkörpers 1 an der Steuerkante St2 in die Außenumfangsnut 28 des Hauptsteuerkolbens 20 über und gelangt von dort in den Druckmittelauslaß 40. Je enger der Durchgangsquerschnitt an der Steuerkante St2 ist, umso geringer ist der Druck im Druckmittelauslaß 40. Bei größer werdendem Durchgangsquerschnitt nähert sich der Druck in dem Druckmittelauslaß 40 dem Druck im Druckmitteleinlaß 10 an.

Über die Verbindungsleitung 35 gelangt das Druckmedium in die Meßkammer 49 und beaufschlagt dort die in Fig. 1 linke Stirnseite 30' des Vorsteuerkoblens 30. Die entstehende, gemäß Fig. 1 nach rechts gerichtete Kraft kommt mit der Kraft des Membrankolbens 21 ins Gleichgewicht. Bei der entsprechenden Position des Vorsteuerkolbens ist die Steuerkante St1 weitgehend geschlossen. Der mit dem Druck im Druckmittelauslaß 40 übereinstimmende Druck in der Meßkammer 49 wirkt aber auch auf die dortige Stirnseite 20" des Hauptsteuerkolbens 20 und versucht diesen, unterstützt durch die Kraft der Federn 41, nach rechts zu verlagern. Dadurch verengt sich der Durchgangsquerschnitt an der Steuerkante St2. Durch die Verlagerung des Hauptsteuerkolbens 20 wird der Durchgangsquerschnitt an der Steuerkante St1 wieder geöffnet, so daß Druckmittel unter dem Eingangsdruck über die Querbohrung 26 und die Außenumfangsnut 24 des Vorsteuerkolbens 30 in die Vorsteuerkammer 32 übertreten kann. Dadurch entsteht in der Vorsteuerkammer 32 ein Druck, der den Hauptsteuerkolben 20 nach links zu verlagern trachtet.

Auf diese Weise stellen sich Gleichgewichtspositionen des Vorsteuerkolbens 30 und des Hauptsteuerkolbens 20 ein, die den Druckabfall an der Steuerkante St2 und damit den Druck in dem Druckmittelauslaß 40 bestimmen.

Wenn das Druckmedium die Steuerkante passiert, erfährt der freibewegliche Hauptsteuerkolben 20 durch die Strömungskräfte eine Zusatzkraft, die ihn ein wenig verlagert und dadurch die durch die Druckbeaufschlagung des Steuergliedes 15 gegebene Einstellung, d.h. den Druck im Druckmittelauslaß 40, verändert. Wird der Hauptsteuerkolben 20 gemäß Fig. 1 durch die Strömungskräfte nach rechts verlagert, schließt sich der Durchgangsquerschnitt an der Steuerkante St2 und fällt der Druck im Druckmittelauslaß 40 und dementsprechend in der Meßkammer 49 ab. Dadurch wird der Hauptsteuerkolben 20 unter der Wirkung des in der Vorsteuerkammer 32 herrschenden Druckes wieder nach links zurückgeführt, d.h. die alte Position im wesentlichen wiederhergestellt. Von dem Druckabfall ist auch der Vorsteuerkolben 30 betroffen, der sich ebenfalls ein wenig nach links verlagern wird. Die Steuerkante St1 öffnet sich dadurch, und es kann Druckmittel in die Vorsteuerkammer 32 frei übertreten. Insgesamt stellt sich ein Gleichgewicht ein, welches dem ursprünglichen, durch Strömungskräfte nicht veränderten Gleichgewicht nahe ist. Die Strömungskräfte werden durch diese Konfiguration selbsttätig, d.h. ohne in Inanspruchnahme äußerer Zusatzmittel, nur durch die konstruktive Ausgestaltung und durch das geregelte Druckmittel selbst, kompensiert.

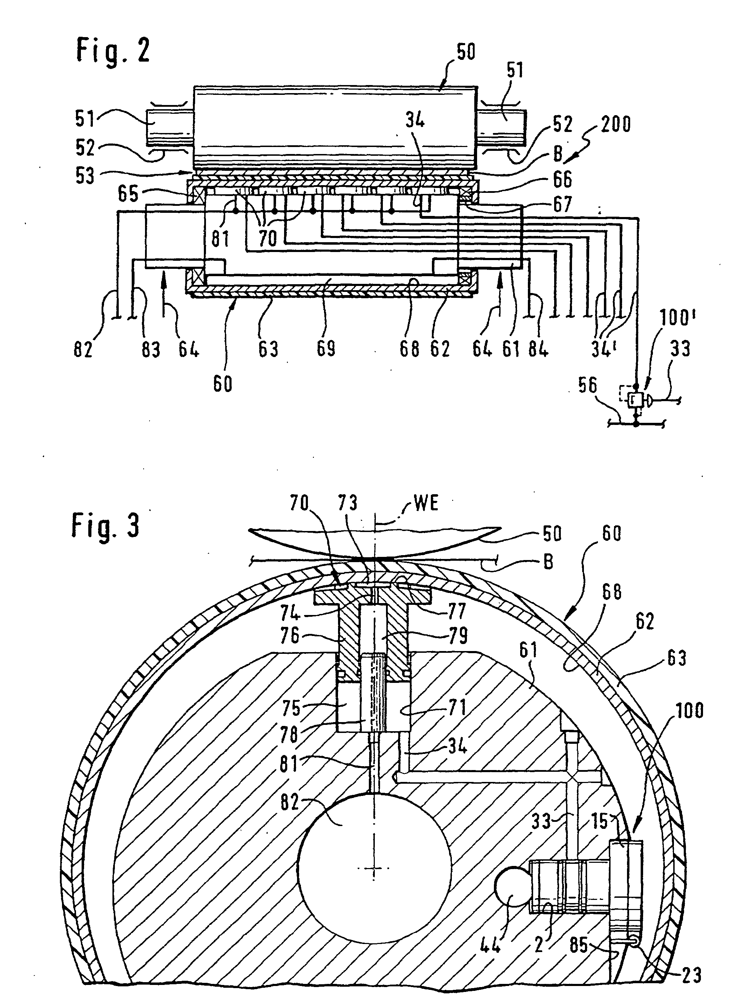

In Fig. 2 ist ein Beispiel für eine zweckmäßige Anwendung des Ventils 100 angedeutet. Sie zeigt eine als Ganzes mit 200 bezeichnete Walzvorrichtung, bei der durch den Einsatz des Steuerventils 100 eine besonders genaue Einstellung des Linienkraftverlaufs längs des Walzspalts 53 möglich ist.

Die Walzvorrichtung 200 umfaßt in dem Ausführungsbeispiel eine konventionelle massive Oberwalze 50, die mit ihren Walzenzapfen 51 in festen Lagern 52 in einem nicht dargestellten Maschinenständer oder dergleichen drehbar gelagert ist.

Von unten ist gegen die Walze 50 eine durchbiegungssteuerbare Walze 60 anstellbar, die mit der Walze 50 einen Walzspalt 53 bildet, in welchem eine in ihrer Dicke übertrieben dargestellte Warenbahn B, zum Beispiel eine Papierbahn, einer Druckbehandlung, z.B. zum Glätten oder Satinieren, unterzogen wird. Die durchbiegungssteuerbare Walze 60 umfaßt ein undrehbares Querhaupt 61, um welches eine Hohlwalze 62, die einen den arbeitenden Walzenumfang bildenden Kunststoffbelag 63 trägt, um ihre Achse umläuft. Das Querhaupt 61 steht an seinen beiden Enden aus der Hohlwalze 62 axial vor und ist in den vorstehenden Bereichen ebenfalls in dem nicht dargestellten Maschinenständer gelagert, um parallel zur Zeichenebene in der Wirkebene WE (Fig. 3) im Sinne der Pfeile 64 gegen die Walze 50 anstellbar zu sein.

Die Hohlwalze 62 beläßt mit ihrem Innenumfang 68 (Fig. 3) ringsum Abstand von dem Querhaupt 61, so daß die Hohlwalze 62 um das Querhaupt 61 umlaufen kann, ohne dieses zu berühren, und zwar auch dann, wenn sich das Querhaupt 61 unter den auf es wirkenden Kräften in der Wirkebene WE durchbiegen sollte.

Die Hohlwalze 62 ist gemäß der auf der linken Seite der Fig. 2 dargestellten Variante mittels Lagern 65 unmittelbar auf dem dortigen Ende des Querhauptes 61 gelagert. Bei der auf der rechten Seite der Fig. 2 angedeuteten Variante sitzen die dortigen Lager 66 auf einem Ring 67, der auf Parallelflächen an dem Querhaupt 61 in der Wirkebene WE verlagerbar ist. Bei dieser Version werden über die Lager 66 nur Führungskräfte übertragen. Eine solche Walze besitzt einen sogenannten "inneren Hub".

Zur Übertragung der Kräfte aus dem Walzspalt 53 auf das Querhaupt 61 sind auf der gemäß Fig. 2 oberen Seite des Querhauptes innerhalb der Hohlwalze 62 längs einer achsparallelen Linie aufgereihte hydrostatische Stützelemente 70 vorgesehen, die mit ihrer Anlagefläche gegen den Innenumfang 68 der Hohlwalze 62 anliegen. In dem Ausführungsbeispiel sind sechs solcher Stützelemente 70 angedeutet; es können jedoch auch wesentlich mehr Stützelemente vorhanden sein. Auch ist es möglich, daß ein in Fig. 2 durch ein flaches Rechteck angedeutetes Stützelement 70 in Wahrheit aus mehreren einzelnen Stützelementen besteht und somit eine Gruppe von Stützelementen versinnbildlicht, die gemeinsam angesteuert werden und eine einheitliche Druckzone bilden. Bei der durchbiegungssteuerbaren Walze 60 handelt es sich unter diesem Gesichtspunkt um eine sechszonige Walze.

Die sich in dem im Querschnitt ringförmigen Zwischenraum 69 ansammelnde an den Anlageflächen 77 der Stützelemente 70 austretende Druckflüssigkeit wird über die Leitungen 83,84 aus dem Zwischenraum 69 abgeführt

Der Aufbau der Stützelemente 70 geht im einzelnen aus Fig. 3 hervor. Jedes Stützelement umfaßt einen kolbenartigen Teil 76, der in eine Bohrung 71 in der Oberseite, d.h. der dem Walzspalt 53 zugewandten Seite des Querhaupts 61, eingreift. "Unter" dem kolbenartigen Teil 76 ist in der Bohrung 71 eine Zylinderkammer 75 gebildet, von deren Boden eine Art Rohrkolben 78 hochragt, der in eine zylindrische zur Achse des kolbenartigen Teils 76 koaxiale Übergangskammer 79 im Innem des kolbenartigen Teils 76 eingreift. Die Übergangskammer 79 steht über eine Bohrung 74 mit einer in der dem Innenumfang 68 der Hohlwalze 62 angepaßten Anlagefläche 77 des Stützelements 70 ausgebildeten Lagertasche 73 in Verbindung.

Das Stützelement 70 wird mit zwei verschiedenen Druckflüssigkeitsmengen versorgt. Die Druckflüssigkeitsmenge für die Lagertaschen 73 wird über eine zentrale Zuleitung 82 im Innern des Querhaupts 61 herangeführt und tritt über radial verlaufende Verbindungsleitungen 81 und den jeweiligen Rohrkolben 78 in die Übergangskammer 79 und von dort über den Kanal 74 in die Lagertasche 73 über.

Der Anpreßdruck der einzelnen Stützelemente wird durch weitere Druckflüssigkeitsmengen bestimmt, die den Zylinderkammern 75 der einzelnen Stützelemente 70 getrennt zugeleitet werden. Diese Druckflüssigkeitsmengen werden für jedes einzelne Stützelement 70 bzw. für Gruppen solcher Stützelemente separat geregelt.

In Fig. 2 ist eine Ausführungsform dargestellt, bei der die Druckregelventile 100' dem Stand der Technik entsprechen und außerhalb der Walze 60 angeordnet sind. Es ist in Fig. 2 nur an der äußersten Zuleitung 34 für das am weitesten rechts gelegene Stützelement 70 ein Duckregelventil 100' dargestellt, doch versteht es sich, daß auch die Zuleitungen zu den anderen fünf Stützelementen 70 mit derartigen äußeren Druckregelventilen versehen sind.

In den separaten Leitungen 34' verlaufen hierbei also separate Druckflüssigkeitsmengen, die aus einer gemeinsamen äußeren Zuleitung 56 von den äußeren Druckregelventilen 100' auf die gewünschten Druckwerte gebracht werden und durch das Querhaupt 61 hindurch den einzelnen Stützelementen 70 zugeführt werden müssen. Dies erfordert einen erheblichen Aufwand an in Längsrichtung durch das Querhaupt 61 hindurchgehenden Tiefbohrungen.

Gemäß Fig. 3 wird dieser Aufwand bedeutend vermindert, indem Druckregelventile 100 nach Fig. 1 verwendet und im Innern der Walze 60 angeordnet werden.

In Höhe des einzelnen Stützelements 70 - in Längsrichtung der Walze 60 gesehen - sind in das Querhaupt 61, welches dem äußeren Konstruktionsteil 3 der Fig. 1 entspricht, Querbohrungen 2 angebracht, die mit ihrem Grund die gemeinsame als Längsbohrung des Querhaupts 61 ausgebildete Druckmittelzuleitung 44 anschneiden. In der Querbohrung 2 sitzt ein Druckregelventil 100 nach Fig. 1, weiches mit der ebenen Unterseite seines Steuergliedes 15 auf einer ebenen, zur Achse der jeweiligen Querbohrung 2 senkrechten Anlagefläche 85 anliegt. Das jeweilige Druckregelventil 100 ist über eine Leitung 34 mit dem zugehörigen Stützelement 70 verbunden. Die Querbohrungen 2 liegen im Bereich der bei einer Biegung des Querhauptes 61 in der Wirkebene WE vorhandenen neutralen Zone und schwächen daher das Querhaupt 61 hinsichtlich seiner Biegesteifigkeit nicht wesentlich. Es bedarf nur der einen Druckmittelzuleitung 44 für alle Stützelemente 70. Das an den Steuerdruckmittelanschlüssen 23 eintretende Steuerdruckmittel wird nur in sehr geringen Mengen benötigt und kann daher durch dünne Leitungen zugeführt werden, die in dem Zwischenraum zwischen Querhaupt 61 und dem Innenumfang 68 der Hohlwalze 62 Platz finden. Die Leitungslängen von dem jeweiligen Druckregelventil 100 bis zu dem zugehörigen Stützelement sind - verglichen mit Fig. 2 - wesentlich kürzer.

Durch den Einsatz der Druckregelventile 100 verringert sich nicht nur der bauliche Aufwand für die Versorgung der Vielzahl von Stützelementen 70, sondern stellt sich auch eine größere Genauigkeit der Linienkraftregelung ein, weil die Druckregelventile 100 die Eigenschaft der Strömungskraftkompensation haben.

Die wiedergegebenen Stützelemente 70 sind nur Ausführungsbeispiele. Maßgebend ist nur, daß es sich um Stützelemente handelt, die über eine Zuleitung 34 mit Druckmittel unter geregeltem Druck zu versorgen sind.

## Patentansprüche

1. Druckregelventil (100) für ein fluides Druckmittel
mit einem Druckmitteleinlaß (10) und einem Druckmittelauslaß (40),
mit einem Ventilkörper (1) mit einer eine Achse (A) aufweisenden Bohrung (4),
mit einer Steuerkolbenanordnung mit einem in der Bohrung (4) längs der Achse (A) verschieblich angeordneten Hauptsteuerkolben (20) mit einer Steuerkante (St 2), mittels derer bei einer Längsverschiebung des Hauptsteuerkolbens der Durchgangsquerschnitt zwischen dem Druckmitteleinlaß (10) und dem Druckmittelauslaß (40) veränderbar ist,
und mit einem Vorsteuerkolben (30), der von dem Hauptsteuerkolben (20) umgeben und gegenüber diesem längsverschieblich ist und mit einem Steuerglied (15), welches eine axiale Kraft auf die Steuerkolbenanordnung ausübt, **dadurch gekennzeichnet, daß** der Vorsteuerkolben (30) eine Vorsteuerkante (St 1) aufweist, die über einen in dem Hauptsteuerkolben (20) vorgesehenen Kanal mit dem Druckmitteleinlaß (10) und über eine Längsverbindung mit der dem Steuerglied (15) zugewandten Stirnseite (20") des Hauptsteuerkolbens (20) in Verbindung steht, während die andere Stirnseite (20') des Hauptsteuerkolbens (20) über eine Verbindung von dem Druckmittelauslaß (40) beaufschlagt ist.

2. Druckregelventil nach Anspruch 1, **dadurch gekennzeichnet, daß** der Hauptsteuerkolben (20) eine Durchgangsbohrung (11) aufweist, in die der Vorsteuerkolben (30) eingreift, daß in der Bohrung (4) des Ventilkörpers (1) auf der dem Steuerglied (15) abgewandten Seite eine Meßkammer (49) gebildet ist, die axial nach außen geschlossen und deren Begrenzung zur anderen Seite hin von den Stirnseiten (30', 20') des Hauptsteuerkolbens (20) bzw. des Vorsteuerkolbens (30) gemeinsam gebildet ist, und daß die Meßkammer (49) mit dem Druckmittelauslaß (40) verbunden ist.

3. Druckregelventil nach Anspruch 2 **dadurch gekennzeichnet, daß** in die Verbindung (35) des Druckmittelauslasses (40) und der anderen Stirnseiten (20',30') des Hauptsteuerkolbens (20) bzw. des Vorsteuerkolbens (30) eine Dämpfungsdrossel (36) eingeschaltet ist.

4. Druckregelventil nach einer der Ansprüche 1 bis 3, **dadurch gekennzeichnet, daß** auf der dem Steuerglied (15) zugewandten Seite des Hauptsteuerkolbens (20) eine Vorsteuerkammer (32) gebildet ist, die in der dem Steuerglied (15) abgewandten Richtung durch die dortige Stirnseite (20") des Hauptsteuerkolbens (20) begrenzt ist.

5. Druckregetventil nach einem der Ansprüche 1 bis 4, **dadurch gekennzeichnet, daß** ein federbelastetes Rückschlagventil (39) vorgesehen ist, welches in Schließrichtung außer durch die Feder durch den Druck in der Vorsteuerkammer (32) und in Öffnungsrichtung durch den Druck in dem Druckmitteleinlaß (10) belastet ist.

6. Druckregelventil nach einem der Ansprüche 1 bis 5, **dadurch gekennzeichnet, daß** der Druckmitteleinlaß (10) an der dem Steuerglied (15) abgewandten Stirnseite des Ventilkörpers (1) mündet.

7. Druckregelventil nach einem der Ansprüche 1 bis 6, **dadurch gekennzeichnet, daß** der Ventilkörper (1) außen zylindrisch ist.

8. Druckregelventil nach Anspruch 7, **dadurch gekennzeichnet, daß** der Druckmittelauslaß (40) auf dem zylindrischen Außenumfang des Ventilkörpers (1) mündet und der Mündungsbereich nach beiden Seiten - axial gesehen - durch in Umfangsnuten (42, 48) des Ventilkörpers (1) angeordnete Ringdichtungen (43, 45) abgedichtet ist.

9. Druckregelventil nach einem der Ansprüche 1 bis 8, **dadurch gekennzeichnet, daß** das Steuerglied (15) die Außengestalt einer zylindrische, zu dem Ventilkörper (1) koaxialen Scheibe hat, die mit dem Rand (R) über den Außenumfang des Ventilkörpers (1) radial vorspringt.

10. Walze (60) mit zonenweise steuerbarem Liniendruck, welche eine den arbeitenden Walzenumfang bildende umlaufende Hohlwalze (62, 63) und ein diese der Länge nach durchgreifendes, ringsum Abstand vom Innenumfang (68) der Hohlwalze (62) belassendes undrehbares Querhaupt (61) und eine Reihe von über die Länge der Hohlwalze verteilten, in mindestens einer durch die Achse des Querhauptes (61) gehenden Ebene angeordneten druckmittelbetätigten. kolbenartigen Stützelementen (70) umfaßt, die mit äußeren Lagerflächen (77) gegen den Innenumfang (68) der Hohlwalze (62, 63) anliegen, wobei mindestens eines der Stützelemente (70) separat von anderen mit Druckflüssigkeit beaufschlagbar und zur Steuerung des Drucks dieser Druckflüssigkeit ein in dem Querhaupt (61) angeordnetes, von einem Steuermittel beaufschlagtes Druckregelventil vorgesehen ist, **dadurch gekennzeichnet, daß** das Druckregelventil (100) ein solches nach den Ansprüchen 1 bis 9 ist.

11. Walze nach Anspruch 10, **dadurch gekennzeichnet, daß** der Ventilkörper (1) in einer im Durchmesser entsprechenden Querbohrung (2) des Querhaupts (61) angeordnet ist und mit der Unterseite des Randes des Steuergliedes (15) gegen die Außenseite des Querhauptes (61) anliegt.

12. Walze nach Anspruch 11, **dadurch gekennzeichnet, daß** der Rand der Querbohrung (2) von einer ebenen Anlagefläche (85) für die Unterseite des Randes des Steuergliedes (15) umgeben ist.

13. Walze nach Anspruch 11 oder 12, **dadurch gekennzeichnet, daß** die Querbohrungen (2) in einer zu der Ebene (WE) der Stützelemente (70) senkrechten Ebene im Bereich der bei der durch die Stützelemente (70) herbeigeführten Durchbiegung des Querhaupts (61) neutralen Zone angeordnet sind.

14. Verwendung eines Druckregelventils (100) nach den Ansprüchen 1 bis 10 zur Regelung der Druckmittelzufuhr zu einem Stützelement (70) einer Walze nach den Ansarüchen 10 bis 13.

## Claims

1. Pressure-regulating valve (100) for a fluid pressure medium,
having a pressure-medium inlet (10) and a pressure-medium outlet (40),
having a valve body (1) with a bore (4) which has an axis (A),
having a control-piston arrangement with a main control piston (20) which is arranged in the bore (4) such that it can be displaced along the axis (A), and has a control edge (St 2) by means of which, during longitudinal displacement of the main control piston, it is possible to change the through-passage cross section between the pressure-medium inlet (10) and the pressure-medium outlet (40),
and having a pilot piston (30) which is enclosed by the main control piston (20) and can be displaced longitudinally in relation to the same, and having a control member (15) which subjects the control-piston arrangement to an axial force, **characterized in that** the pilot piston (30) has a pilot-control edge (St 1) which is connected, via a channel provided in the main control piston (20), to the pressure-medium inlet (10) and, via a longitudinal connection, to the end side (20") of the main control piston (20), said end side being directed towards the control member (15), while the other end side (20') of the main control piston (20) is open to action from the pressure-medium outlet (40) via a connection.

2. Pressure-regulating valve according to Claim 1, **characterized in that** the main control piston (20) has a through-bore (11) in which the pilot piston (30) engages, **in that** formed in the bore (4) of the valve body (1), on the side which is directed away from the control member (15), is a measuring chamber (49), which is closed axially in the outward direction and which is bounded, in the direction of the other side, by the end sides (30', 20') of the main control piston (20) and of the pilot piston (30), and **in that** the measuring chamber (49) is connected to the pressure-medium outlet (40).

3. Pressure-regulating valve according to Claim 2, **characterized in that** a damping restrictor (36) is incorporated in the connection (35) of the pressure-medium outlet (40) and of the other end sides (20', 30') of the main control piston (20) and of the pilot piston (30), respectively.

4. Pressure-regulating valve according to one of Claims 1 to 3, **characterized in that** formed on that side of the main control piston (20) which is directed towards the control member (15) is a pilot chamber (32), which is bounded in the direction away from the control member (15) by the end side (20") of the main control piston (20) there.

5. Pressure-regulating valve according to one .of Claims 1 to 4, **characterized in that** a spring-loaded non-return valve (39) is provided and is subjected to loading in the closing direction by the pressure in the pilot chamber (32), as well as by the spring, and in the opening direction by the pressure in the pressure-medium inlet (10).

6. Pressure-regulating valve according to one of Claims 1 to 5, **characterized in that** the pressure-medium inlet (10) opens out on that end side of the valve body (1) which is directed away from the control member (15).

7. Pressure-regulating valve according to one of Claims 1 to 6, **characterized in that** the valve body (1) is cylindrical on the outside.

8. Pressure-regulating valve according to Claim 7, **characterized in that** the pressure-medium outlet (40) opens out on the cylindrical outer circumference of the valve body (1) and the mouth-opening region is sealed towards both sides - as seen in the axial direction - by annular seals (43, 45) arranged in circumferential grooves (42, 48) of the valve body (1).

9. Pressure-regulating valve according to one of Claims 1 to 8, **characterized in that** the control member (15) has the outer configuration of a cylindrical disc which is coaxial with the valve body (1) and projects radially beyond the outer circumference of the valve body (1) by way of the border (R).

10. Roller (60) with linear pressure which can be controlled in certain zones, the roller comprising an encircling hollow roller (62, 63), which forms the working roller circumference, and a non-rotatable crosshead (61), which engages longitudinally through the hollow roller and is spaced apart from the inner circumference (68) of the hollow roller (62) all the way round, and also comprising a row of pressure-medium-actuated, piston-like supporting elements (70), which are distributed over the length of the hollow roller, are arranged in at least one plane passing through the axis of the crosshead (61) and butt against the inner circumference (68) of the hollow roller (62, 63) by way of outer bearing surfaces (77), in which case at least one of the supporting elements (70) can be subjected to the action of pressure fluid separately from others, and a pressure-regulating valve which is arranged in the crosshead (61), and is subjected to the action of a control means, is provided for the purpose of controlling the pressure of said pressure fluid, **characterized in that** the pressure-regulating valve (100) is one according to Claims 1 to 9.

11. Roller according to Claim 10, **characterized in that** the valve body (1) is arranged in a corresponding-diameter transverse bore (2) of the crosshead (61) and butts against the outside of the crosshead (61) by way of the underside of the border of the control member (15).

12. Roller according to Claim 11, **characterized in that** the border of the transverse bore (2) is enclosed by a planar abutment surface (85) for the underside of the border of the control member (15).

13. Roller according to Claim 11 or 12, **characterized in that** the transverse bores (2) are arranged in a plane perpendicular to the plane (WE) of the supporting elements (70) in the region of the zone which is neutral when the crosshead (61) is deflected by the supporting elements (70).

14. Use of a pressure-regulating valve (100) according to Claims 1 to 9 for regulating the supply of pressure medium to a supporting element (70) of a roller according to Claims 10 to 13.

## Revendications

1. Soupape de réglage de pression (100) pour produit fluide sous pression
avec une admission de produit sous pression (10) et une sortie de produit sous pression (40),
avec un corps de soupape (1) pourvu d'un alésage (4) présentant un axe (A),
avec un arrangement de pistons de commande comportant un piston de commande principal (20) disposé de manière mobile dans l'alésage (4) le long de l'axe (A) comportant une arête de commande (St 2) permettant de modifier, lors du décalage longitudinal du piston de commande principal, la section transversale de passage entre l'admission de produit sous pression (10) et la sortie de produit sous pression (40),
et avec un piston de pré-commande (30) qui est entouré par le piston de commande principal (20) et est déplaçable en longueur par rapport à celui-ci et avec un élément de commande (15) qui exerce une force axiale sur l'arrangement de pistons de commande, **caractérisée en ce que** le piston de pré-commande (30) présente une arête de pré-commande (St 1) qui est en liaison, par l'intermédiaire d'un canal prévu dans le piston de commande principal (20) avec l'admission de produit sous pression (10) et et, par une liaison longitudinale, en liaison avec la face frontale (20") tournée vers l'élément de commande (15) du piston de commande principal (20), tandis que l'autre face frontale (20') du piston de commande principal (20) est sollicitée par l'intermédiaire d'une liaison par la sortie de produit sous pression (40).

2. Soupape de réglage de pression selon la revendication 1, **caractérisée en ce que** le piston de commande principal (20) présente un alésage traversant (11) dans lequel s'engrène le piston de pré-commande (30), que, dans l'alésage (4) du corps de soupape (1), sur la face détournée de l'élément de commande (15), est constituée une chambre de mesure (49) qui est fermée axialement vers l'extérieur et dont la limitation en direction de l'autre face est constituée par les faces frontales (30', 20') du piston de commande principal (20) ou du piston de pré-commande (30) réunies, et que la chambre de mesure (49) est reliée à la sortie de produit sous pression (40).

3. Soupape de réglage de pression selon la revendication 2, **caractérisée en ce que** dans la liaison (35) de la sortie de produit sous pression (40) et des autres faces frontales (20', 30') du piston de commande principal (20) ou du piston de pré-commande (30) est branché un restricteur à amortissement (36).

4. Soupape de réglage de pression selon l'une quelconque des revendications 1 à 3, **caractérisée en ce que**, sur la face tournée vers l'élément de commande (15) du piston de commande principal (20), est constituée une chambre de pré-commande (32) qui est limitée, dans la direction détournée de l'élément de commande (15), par la face frontale (20") qui s'y trouve du piston de commande principal (20).

5. Soupape de réglage de pression selon l'une quelconque des revendications 1 à 4, **caractérisée en ce qu'**il est prévu une soupape anti-retour (39) chargée par ressort, qui est chargée, dans son sens de fermeture, outre par le ressort, par la pression dans la chambre de pré-commande (32) et, dans le sens d'ouverture, par la pression dans l'admission de produit sous pression (10).

6. Soupape de réglage de pression selon l'une quelconque des revendications 1 à 5, **caractérisée en ce que** l'admission de produit sous pression (10) débouche sur la face frontale détournée de l'élément de commande (15) du corps de soupape (1).

7. Soupape de réglage de pression selon l'une quelconque des revendications 1 à 6, **caractérisée en ce que** le corps de soupape (1) est cylindrique à l'extérieur.

8. Soupape de réglage de pression selon la revendication 7, **caractérisée en ce que** la sortie de produit sous pression (40) débouche sur la périphérie cylindrique externe du corps de soupape (1) et que la zone d'embouchure est colmatée vers les deux faces -vu dans le sens axial- par des joints annulaires (43, 45) disposés dans des rainures périphériques (42, 48) du corps de soupape (1).

9. Soupape de réglage de pression selon l'une quelconque des revendications 1 à 8, **caractérisée en ce que** l'élément de commande (15) a la forme extérieure d'un disque cylindrique coaxial au corps de soupape (1) qui dépasse radialement par son bord (R) au-delà de la périphérie externe du corps de soupape (1).

10. Cylindre (60) à pression linéaire localement contrôlable, qui comprend un cylindre creux (62, 63) périphérique formant la périphérie fonctionnelle du cylindre et un fronton (61) ne pouvant pas tourner traversant suivant cette longueur et laissant autour une distance par rapport à la périphérie interne (68) du cylindre creux (62), et une série d'éléments de soutien en forme de pistons (70) actionnés par le produit sous pression, répartis sur la longueur du cylindre creux et disposés dans au moins un plan traversant l'axe du fronton (61), lesquels éléments s'appuient par leurs surfaces de paliers externes (77) contre la périphérie interne (68) du cylindre creux (62, 63), au moins un des éléments de soutien (70) pouvant être sollicité séparément des autres par du liquide sous pression et une soupape de réglage de pression disposée dans le fronton (61) et sollicitée par un moyen de commande étant prévue pour contrôler la pression de ce liquide sous pression, **caractérisé en ce que** la soupape de réglage de pression (100) est conforme aux revendications 1 à 9.

11. Cylindre selon la revendication 10, **caractérisé en ce que** le corps de soupape (1) est disposé dans un alésage transversal (2) correspondant en diamètre du fronton (61) et s'appuie par la face inférieure du bord de l'élément de commande (15) contre la face extérieure du fronton (61).

12. Cylindre selon la revendication 11, **caractérisé en ce que** le bord de l'alésage transversal (2) est entouré par une surface d'appui plane (85) pour la face inférieure du bord de l'élément de commande (15).

13. Cylindre selon la revendication 11 ou 12, **caractérisé en ce que** les alésages transversaux (2) sont disposés dans un plan perpendiculaire au plan (WE) des éléments de soutien (70) dans une région au niveau de la zone neutre de courbure du fronton (61) due aux éléments de soutien (70).

14. Utilisation d'une soupape de réglage de pression (100) selon les revendications 1 à 10 pour régler l'acheminement de produit sous pression vers un élément de soutien (70) d'un cylindre selon les revendications 10 à 13.
